# EUROPÄISCHE PATENTANMELDUNG

(11) **EP 1 695 856 A2**
(43) Veröffentlichungstag der Anmeldung: **30.08.2006**
(21) Anmeldenummer: 06002784.4
(22) Anmeldetag: 11.02.2006
(51) Int. Cl.: B60J 7/20, B62D 25/10

(54) **Verdeckkastendeckel für ein Cabriolet-Fahrezeug**

(30) Priorität: 23.02.2005 DE 202005002887 U
(71) Anmelder: Wilhelm Karmann GmbH, 49084 Osnabrück (DE)
(72) Erfinder: Hesker, Norbert, 48231 Warendorf (DE)

(57) **Zusammenfassung**

Verdeckkastendeckel für ein Cabriolet-Fahrzeug mit einer oberen Schale und einer mit dieser verbundenen unteren Schale, dadurch gekennzeichnet, daß die obere und die untere Schale aus glasfaserverstärktem Duroplast, insbesondere SMC, hergestellt sind.

## Beschreibung

Die vorliegende Erfindung betrifft einen Verdeckkastendeckel für ein Cabriolet-Fahrzeug mit einer oberen Schale und einer mit dieser verbundenen unteren Schale. Die Angaben "obere" und "untere" beziehen sich dabei auf einen in einem Cabriolet-Fahrzeug eingebauten und den Verdeckkasten abdeckenden Verdeckkastendeckel, bei dem also sich die obere Schale im wesentlichen vertikal über der unteren Schale befindet.

Ein Verdeckkastendeckel der eingangs genannten Art ist aus der DE 201 16 106 U1 bekannt. Die obere Schale besteht zur Gewichtseinsparung aus Kunststoff und die untere Schale besteht zur Erhöhung der Stabilität aus Metall. Durch das Metall ist der Verdeckkastendeckel relativ schwer.

Der Erfindung liegt somit die Aufgabe zugrunde, den gattungsgemäßen Verdeckkastendeckel derart weiterzubilden, daß er bei im wesentlichen gleichbleibender oder sogar noch höherer Stabilität leichter als bisher ist.

Erfindungsgemäß wird diese Aufgabe bei dem gattungsgemäßen Verdeckkastendeckel dadurch gelöst, daß die obere und die untere Schale aus glasfaserverstärktem Duroplast, insbesondere SMC, hergestellt sind.

Gemäß einer besonderen Ausführungsform der Erfindung kann vorgesehen sein, daß die obere Schale von der unteren Schale bereichsweise beabstandet ist.

Vorteilhafterweise weist die obere Schale mindestens eine Verstärkungseinrichtung auf.

Ebenfalls vorzugsweise weist die untere Schale mindestens eine Verstärkungseinrichtung auf.

Günstigerweise umfaßt die die Verstärkungseinrichtung eine Materialverstärkung, eine Rippe oder eine entsprechende Geometrie.

Vorteilhafterweise weist die untere Schale mindestens einen Gewindeeinsatz aufweist.

Gemäß einer weiteren besonderen Ausführungsform der Erfindung kann vorgesehen sein, daß die untere Schale aus einem innenliegenden und einem außenliegenden Teil besteht. Die Angaben "innenliegenden" und "außenliegenden" beziehen sich auf einen in ein Cabriolet-Fahrzeug eingebauten Verdeckkastendeckel, wobei sich die Angabe "innenliegend" auf den Fahrgastraum bezieht, das heißt zum Fahrgastraum hin liegend bedeutet.

Insbesondere kann dabei vorgesehen sein, daß der innenliegende Teil und der außenliegende Teil miteinander gefügt sind.

Vorteilhafterweise sind der innenliegende Teil und der außenliegende Teil durch Kleben miteinander gefügt.

Zweckmäßigerweise ist die Verstärkungseinrichtung im innenliegenden Teil vorgesehen.

Ebenfalls ist der Gewindeeinsatz zweckmäßigerweise im innenliegenden Teil vorgesehen.

Vorteilhafterweise ist/sind der außenliegende und/oder der innenliegende Teil leitfähig grundiert. Dadurch ist der jeweilige. Teil oder sind beide teile mittels kathaphoretischer Tauchlackierung lackierbar.

Vorteilhafterweise ist der außenliegende Teil auf seiner Oberseite mit einer Class A-Decklack-Beschichtung versehen.

Auch kann vorgesehen sein, daß der innenliegende Teil und/oder der außenliegende Teil auf seiner Unterseite mit einer Strukturlack-Beschichtung versehen ist/sind. Durch den Strukturlack (Innenraumfarbe) kann auf eine separate Verkleidung verzichtet werden.

Günstigerweise sind die obere Schale und die untere miteinander gefügt.

Insbesondere kann dabei vorgesehen sein, daß die obere Schale und die untere Schale durch Kleben miteinander gefügt sind.

Auch ist denkbar, daß die obere Schale und die untere Schale miteinander verschraubt sind. Dies kann auch zusätzlich zum Beispiel zum Kleben vorgesehen sein.

Weiterhin ist denkbar, daß die obere Schale die untere Schale nach außen hin nicht vollständig bedeckt.

Günstigerweise ist die obere Schale in einem außenliegenden Bereich durch eine Dichtung zur unteren Schale abgedichtet.

Vorteilhafterweise ist die obere Schale einstückig ausgebildet ist.

Gemäß einer besonders bevorzugten Ausführungsform ist die obere Schale auf ihrer Oberseite in einem außenliegenden Bereich mit einer Chromschicht versehen. Die Chromschicht kann als eine Scheuerleiste dienen.

Auch kann vorgesehen sein, daß im wesentlichen der verbleibende Bereich der Oberseite der oberen Schale mit Leder bezogen ist.

Alternativ kann auch vorgesehen sein, daß im wesentlichen der verbleibende Bereich der Oberseite der oberen Schale mit PVC bezogen ist.

Zweckmäßigerweise ist im wesentlichen der verbleibende Bereich der Oberseite der oberen Schale mit einer Softlack-Beschichtung versehen. Der Softlack kann in der Ausstattungsfarbe des Cabriolet-Fahrzeugs gewählt werden.

Zweckmäßigerweise ist der außenliegende Bereich durch eine Fuge nach innen begrenzt. Dies erleichtert die Beschichtung des außenliegenden Bereiches mit zum Beispiel Kupfer durch zum Beispiel Plasmanitrieren und zum Beispiel anschließendem Verchromen.

Günstigerweise ist in der Fuge ein Keder angeordnet.

Schließlich kann alternativ vorgesehen sein, daß in der Fuge ein Fugenfüller angeordnet ist.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:
- Figur 1: eine perspektivische Ansicht von einem Verdeckkastendeckel gemäß einer besonderen Ausführungsform der vorliegenden Erfindung von hinten von schräg oben;
- Figur 2: eine Schnittansicht entlang der Linie II-II von Figur 1;

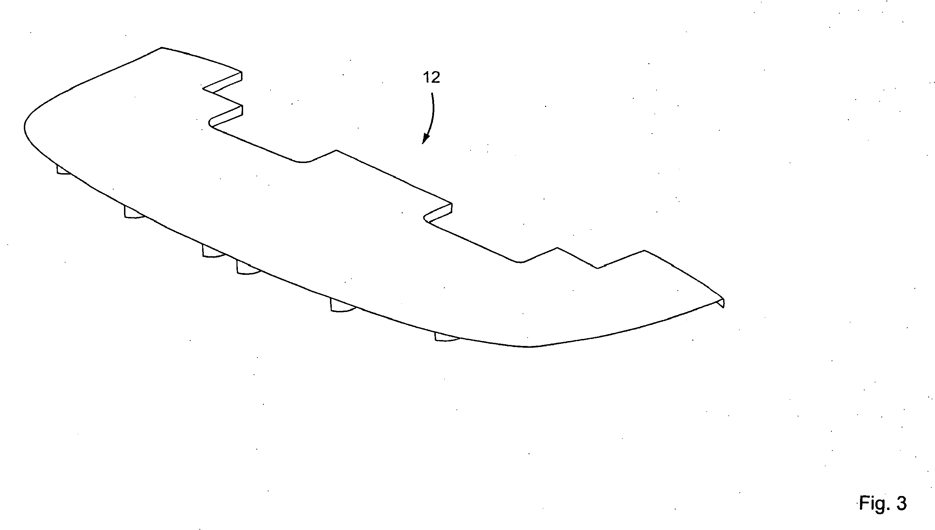

- Figur 3: eine perspektivische Ansicht von der oberen Schale des Verdeckkastendeckels von Figur 1 von schräg oben;
- Figur 4: eine perspektivische Ansicht von der oberen Schale von Figur 3 von schräg unten;
- Figur 5: eine perspektivische Ansicht vom innenliegenden Teil der unteren Schale des Verdeckkastendeckels von Figur 1 von schräg oben; und

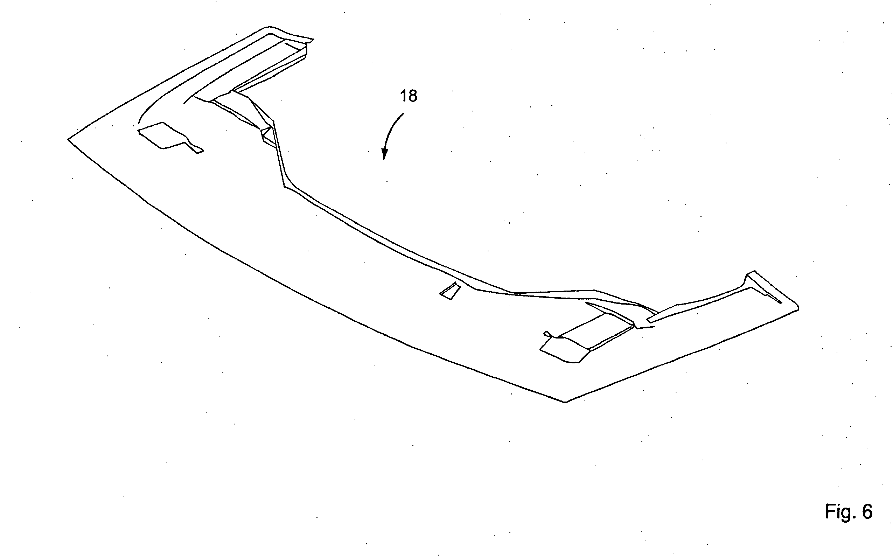

- Figur 6: eine perspektivische Ansicht vom außenliegenden Teil der unteren Schale des Verdeckkastendeckels von Figur 1 von schräg oben.

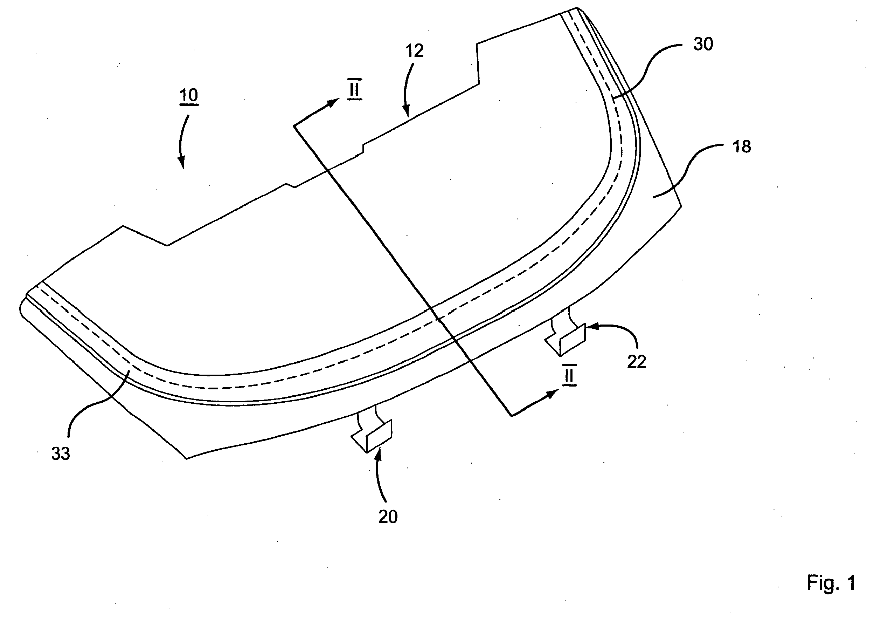

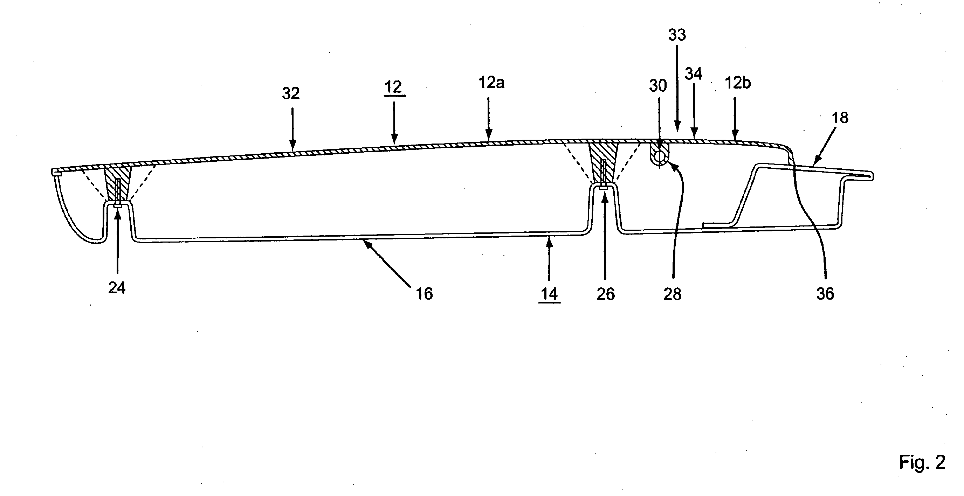

Der in Figur 1 gezeigte Verdeckkastendeckel 10 ist - wie in Figur 2 gezeigt - zweischalig, das heißt aus einer oberen Schale 12 und einer unteren Schale 14 aufgebaut. Die untere Schale 14 besteht aus einem innenliegenden Teil 16, der bei in ein Cabriolet-Fahrzeug (nicht gezeigt) eingebautem und einen Verdeckkasten (nicht gezeigt) abdeckendem Verdeckkastendeckel 10 zur Fahrgastzelle (die sich in Figur 2 auf der linken Seite befinden würde) liegt, und einem sichelförmigen außenliegenden Teil 18. Der innenliegende Teil 16 und der außenliegende Teil 18 sind durch Kleben miteinander verbunden.

Die obere Schale 12 weist geringere Abmessungen in Richtung von innen nach außen auf, so daß in Draufsicht von oben der außenliegende Teil 18 die obere Schale 12 nach außen überragt. An der Unterseite des innenliegenden Teils 16 sind Scharnierarme 20 und 22 zum gelenkigen Befestigen des Verdeckkastendeckels 10 an einer Karosserie (nicht gezeigt) befestigt (siehe Figur 1).

Die obere Schale 12 ist mittels Schrauben, von denen hier nur zwei gezeigt und mit den Bezugszeichen 24 und 26 gekennzeichnet sind, an der unteren Schale 14, genauer gesagt am innenliegenden Teil 16 befestigt. Erforderlichenfalls kann die obere Schale 12 an der unteren Schale 14 zusätzlich durch Kleben befestigt sein. Die obere Schale 12 weist einen innenliegenden Bereich 12a und einen außenliegenden Bereich 12b auf, die durch eine Fuge 28 (siehe Figur 2) voneinander getrennt sind, wobei in der Fuge ein umlaufender Keder 30 angeordnet ist, der in Figur 1 lediglich durch eine gestrichelte Linie dargestellt ist. Der innenliegende Bereich 12a ist mit einem Lederbezug 32 versehen und der außenliegende Bereich 12b ist mit einer Chrombeschichtung 34 versehen, die als eine Scheuerleiste dient.

Nach außen hin ist der außenliegende Bereich 12b zum außenliegenden Teil 18 durch eine umlaufende Dichtung 36 abgedichtet.

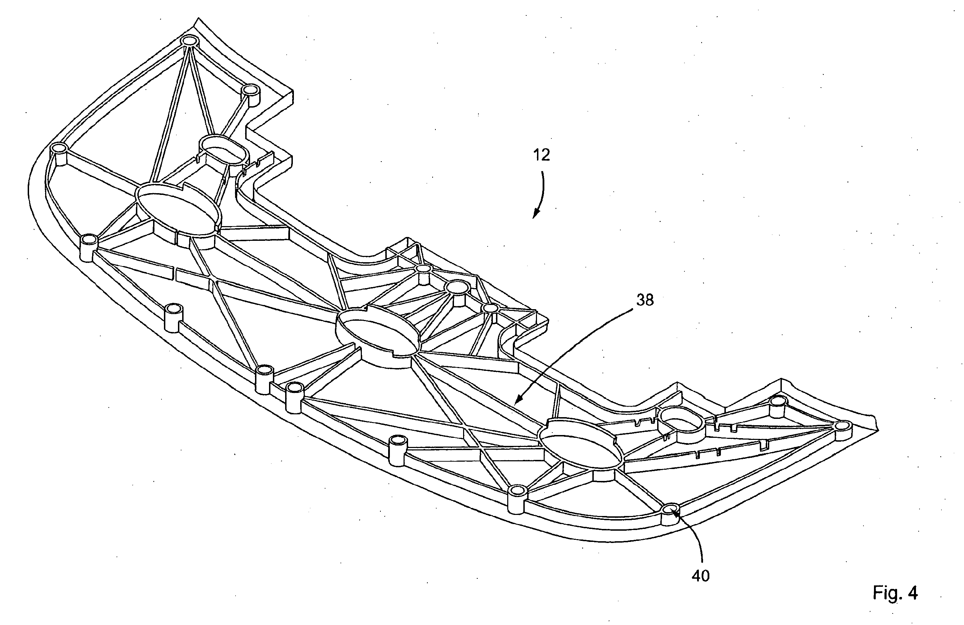

Aus der Figur 4 ergibt sich die Gestaltung der Unterseite der oberen Schale 12. Deutlich sind Rippen zur Verstärkung, von denen nur eine durch das Bezugszeichen 38 gekennzeichnet ist, sowie Gewindeeinsätze zu erkennen, von denen nur einer durch das Bezugszeichen 40 gekennzeichnet ist.

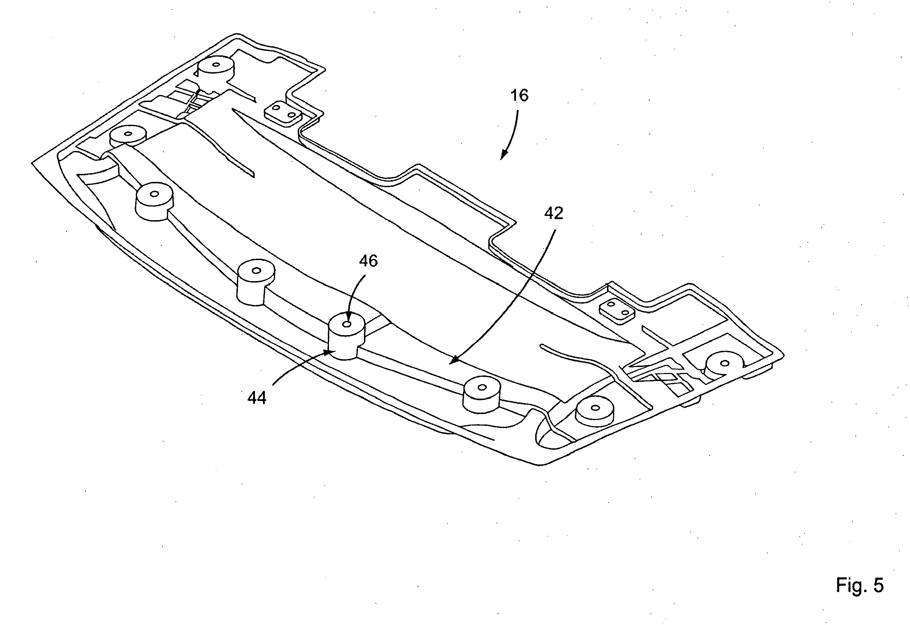

Wie sich aus der Figur 5 ergibt, weist der innenliegende Teil 16 der unteren Schale 14 ebenfalls Rippen zur Verstärkung auf, von denen lediglich eine mit dem Bezugszeichen 42 gekennzeichnet ist. Außerdem sind in den Stirnflächen von zylindrischen Erhebungen, von denen lediglich eine mit dem Bezugszeichen 44 gekennzeichnet ist, Durchgangsbohrungen, von denen lediglich eine mit dem Bezugszeichen 46 gekennzeichnet ist, ausgebildet. Die Durchgangsbohrungen dienen zur Befestigung der oberen Schale 12 an der unteren Schale 14 mittels Schrauben 24, 26, wie dies in Figur 1 gezeigt ist.

Die untere Schale 14 kann im Rohbau aus dem innenliegenden Teil 16 und dem außenliegenden Teil 18 vorbereitet und gegebenenfalls vorlackiert oder innerhalb des Produktionsprozesses mitlackiert werden. Die obere Schale 12 wird separat hergestellt. In der Fertigmontage des Cabriolet-Fahrzeugs wird die obere Schale 12 auf die untere Schale 14 gesetzt, verschraubt und gegebenenfalls zusätzlich verklebt. Dadurch bekommt der Verdeckkastendeckel 10 die finale Steifigkeit und erfüllt er die allgemeinen (Lastenheft)-Anforderungen. Der erfindungsgemäße Verdeckkastendeckel führt zu einer deutlichen Gewichts- und Kostenreduzierung. Er läßt sich mit einem wesentlich geringeren Montageaufwand herstellen und bietet mehr Freiheit hinsichtlich des Designs.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verdeckkastendeckel (10) für ein Cabriolet-Fahrzeug mit einer oberen Schale (12) und einer mit dieser verbundenen unteren Schale (14),
**dadurch gekennzeichnet,**
**daß** die obere und die untere Schale (14) aus glasfaserverstärktem Duroplast, insbesondere SMC, hergestellt sind.

2. Verdeckkastendeckel (10) nach Anspruch 1,
**dadurch gekennzeichnet,**
**daß** die obere Schale (12) von der unteren Schale (14) nur bereichsweise beabstandet ist.

3. Verdeckkastendeckel (10) nach Anspruch 1 oder 2,
**dadurch gekennzeichnet,**
**daß** die obere Schale (12) mindestens eine Verstärkungseinrichtung aufweist.

4. Verdeckkastendeckel (10) nach einem der Ansprüche 1 bis 3,
**dadurch gekennzeichnet,**
**daß** die untere Schale (14) mindestens eine Verstärkungseinrichtung aufweist.

5. Verdeckkastendeckel (10) nach Anspruch 3 oder 4,
**dadurch gekennzeichnet,**
**daß** die Verstärkungseinrichtung eine Materialverstärkung, eine Rippe (38, 42) oder eine entsprechende Geometrie umfaßt.

6. Verdeckkastendeckel (10) nach einem der vorangehenden Ansprüche,
**dadurch gekennzeichnet,**
**daß** die untere Schale (14) mindestens einen Gewindeeinsatz (40) aufweist.

7. Verdeckkastendeckel (10) nach einem der vorangehenden Ansprüche,
**dadurch gekennzeichnet,**
**daß** die untere Schale (14) aus einem innenliegenden (16) und einem außenliegenden Teil (18) besteht.

8. Verdeckkastendeckel (10) nach Anspruch 7,
**dadurch gekennzeichnet,**
**daß** der innenliegende (16) und der außenliegende Teil (18) miteinander gefügt sind.

9. Verdeckkastendeckel (10) nach Anspruch 8,
**dadurch gekennzeichnet,**
**daß** der innenliegende Teil (16) und der außenliegende Teil (18) durch Kleben miteinander gefügt sind.

10. Verdeckkastendeckel (10) nach einem der Ansprüche 7 bis 9,
**dadurch gekennzeichnet,**
**daß** die Verstärkungseinrichtung im innenliegenden Teil (16) vorgesehen ist.

11. Verdeckkastendeckel (10) nach einem der Ansprüche 7 bis 10,
**dadurch gekennzeichnet,**
**daß** der Gewindeeinsatz (40) im innenliegenden Teil (16) vorgesehen ist.

12. Verdeckkastendeckel (10) nach einem der Ansprüche 7 bis 11,
**dadurch gekennzeichnet,**
**daß** der außenliegende (18) und/oder der innenliegende Teil (16) leitfähig grundiert ist/sind.

13. Verdeckkastendeckel (10) nach einem der Ansprüche 7 bis 12,
**dadurch gekennzeichnet,**
**daß** der außenliegende Teil (18) auf seiner Oberseite mit einer Class A-Decklack-Beschichtung versehen ist.

14. Verdeckkastendeckel (10) nach einem der Ansprüche 7 bis 13,
**dadurch gekennzeichnet,**
**daß** der innenliegende Teil (16) und/oder der außenliegende Teil (18) auf seiner Unterseite mit einer Strukturlack-Beschichtung versehen ist/sind.

15. Verdeckkastendeckel (10) nach einem der vorangehenden Ansprüche,
**dadurch gekennzeichnet,**
**daß** die obere Schale (12) und die untere Schale (14) miteinander gefügt sind.

16. Verdeckkastendeckel (10) nach Anspruch 15,
**dadurch gekennzeichnet,**
**daß** die obere Schale (12) und die untere Schale (14) durch Kleben miteinander gefügt sind.

17. Verdeckkastendeckel (10) nach Anspruch 15 oder 16,
**dadurch gekennzeichnet,**
**daß** die obere Schale (12) und die untere Schale (14) miteinander verschraubt sind.

18. Verdeckkastendeckel (10) nach einem der vorangehenden Ansprüche,
**dadurch gekennzeichnet,**
**daß** die obere Schale (12) die untere Schale (14) nach außen hin nicht vollständig bedeckt.

19. Verdeckkastendeckel (10) nach Anspruch 18,
**dadurch gekennzeichnet,**
**daß** die obere Schale (12) in einem außenliegenden Bereich (12b)durch eine Dichtung (36) zur unteren Schale (14) abgedichtet ist.

20. Verdeckkastendeckel (10) nach einem der vorangehenden Ansprüche,
**dadurch gekennzeichnet,**
**daß** die obere Schale (12) einstückig ausgebildet ist.

21. Verdeckkastendeckel (10) nach einem der vorangehenden Ansprüche,
**dadurch gekennzeichnet,**
**daß** die obere Schale (12) auf ihrer Oberseite in einem außenliegenden Bereich (12b) mit einer Chromschicht versehen ist.

22. Verdeckkastendeckel (10) nach Anspruch 21,
**dadurch gekennzeichnet,**
**daß** im wesentlichen der verbleibende Bereich der Oberseite der oberen Schale (12) mit Leder bezogen ist.

23. Verdeckkastendeckel (10) nach Anspruch 21,
**dadurch gekennzeichnet,**
**daß** im wesentlichen der verbleibende Bereich der Oberseite der oberen Schale (12) mit PVC bezogen ist.

24. Verdeckkastendeckel (10) nach Anspruch 21,
**dadurch gekennzeichnet,**
**daß** im wesentlichen der verbleibende Bereich der Oberseite der oberen Schale (12) mit einer Softlack-Beschichtung versehen ist.

25. Verdeckkastendeckel (10) nach einem der Ansprüche 21 bis 24,
**dadurch gekennzeichnet,**
**daß** der außenliegende Bereich (12b) durch eine Fuge (28) nach innen begrenzt ist.

26. Verdeckkastendeckel (10) nach Anspruch 25,
**dadurch gekennzeichnet,**
**daß** in der Fuge (28) ein Keder (30) angeordnet ist.

27. Verdeckkastendeckel (10) nach Anspruch 25,
**dadurch gekennzeichnet,**
**daß** in der Fuge (28) ein Fugenfüller angeordnet ist.
